Europäisches Patentamt

**European Patent Office**

**Office européen des brevets**

(11) Numéro de publication: **0 296 056 B1**

(12) **FASCICULE DE BREVET EUROPEEN**

(45) Date de publication de fascicule du brevet: **26.08.92**    (51) Int. Cl.⁵: **F16L 35/00, E21B 17/01**

(21) Numéro de dépôt: **88401471.3**

(22) Date de dépôt: **14.06.88**

(54) Elément à raideur variable pour pied de colonne de transfert.

(30) Priorité: **18.06.87 FR 8708563**

(43) Date de publication de la demande:
**21.12.88 Bulletin 88/51**

(45) Mention de la délivrance du brevet:
**26.08.92 Bulletin 92/35**

(84) Etats contractants désignés:
**GB IT**

(56) Documents cités:
**EP-A- 0 051 091**
**DE-A- 2 407 039**
**FR-A- 657 044**
**FR-A- 2 376 246**
**GB-A- 2 040 014**

(73) Titulaire: **INSTITUT FRANCAIS DU PETROLE**
**4, Avenue de Bois Préau**
**F-92502 Rueil-Malmaison(FR)**

(72) Inventeur: **Sparks, Charles**
**19bis, rue Pasteur**
**F-78110 Le Vesinet(FR)**
Inventeur: **Odru, Pierre**
**7, rue Pablo Picasso**
**F-94120 Fontenay Sous Bois(FR)**

Rank Xerox (UK) Business Services

## Description

La présente invention concerne un élément à raideur variable, notamment pour la connexion d'une ligne à un point fixe, l'autre extrémité de cette ligne étant susceptible de déplacement, ce point fixe pouvant être au fond de l'eau.

L'art antérieur peut être illustré par les documents DE-A-2.402.039 et FR-A-657.044. Le document DE-A-2.402.039 décrit un dispositif de renforcement de l'extrémité d'un tube de raccordement destiné à fixer ce tube sur un pistolet distributeur d'essence. Ce dispositif comporte des segments. Le brevet FR-A-657.044 décrit un manchon de renforcement pour tuyaux flexibles. Ce manchon de renforcement est réalisé par des couches superposées et en gradins de tresses en fils métalliques. Le document FR-A-2 376 246 décrit un élément de renfort local d'une ligne. L'élément de renforcement est constitué par au moins une barre associée entre elles par des anneaux.

La présente invention est notamment applicable aux lignes tendues, par exemple aux lignes d'ancrage, aux lignes de transfert de production pétrolière, telles les colonnes montantes, également désignées par le terme anglo-saxon de "Riser".

Les colonnes actuelles de forage et de production sont généralement liées au fond de la mer par une articulation composée d'une rotule ou d'un joint flexible qui admet un mouvement angulaire de l'ordre de 10° dans une direction quelconque. L'exception à cette règle est donnée par la plate-forme à lignes tendues, installée sur le gisement de HUTTON en mer du Nord, pour laquelle les colonnes de production sont encastrées directement dans les têtes de puits qui se trouvent regroupées à la verticale de la plate-forme.

Un tel encastrement est intéressant pour plusieurs raisons. Tout d'abord, il évite d'imposer une flexion importante aux tubages de production qui se trouvent à l'intérieur de la colonne. Il réduit par ailleurs les débattements angulaires de celle-ci. Enfin, il est plus compact et moins cher et demande moins d'entretien qu'une rotule.

Dans le cas d'un prolongateur de forage, une telle liaison réduit considérablement l'usure des tiges.

L'inconvénient d'un encastrement est que les moments induits par le déport latéral de la plate-forme ainsi que par l'effet du courant marin peuvent être très importants. Pour réduire les contraintes de flexion, qui autrement dépasseraient la limite admissible dans la colonne, il devient nécessaire d'introduire un élément à raideur variable entre la colonne et l'encastrement.

L'élément peut être conçu pour que la courbure provoquée soit sensiblement constante sur toute sa longueur. Ceci demande que la raideur en flexion (EI) évolue d'une façon précise le long de l'élément.

Les données du problème sont les suivantes :

$A_B$ = l'angle en pied de la colonne dans le cas d'une articulation sans raideur,

$(EI)_R$ = la raideur en flexion de la colonne,

$(EI)_O$ = la raideur en flexion de l'extrémité supérieure de l'élément à raideur variable,

$M_O$ = le moment maximal admissible à la jonction entre la colonne et l'élément,

Si T = la force de traction à la jonction

et

$C_O$ = la force de cisaillement à la jonction

et en posant

$K_R$ = $\sqrt{T/(EI)_R}$

$V_R$ = $\sqrt{T.(EI)_R}$

$R_e$ = ce rayon de courbure minimum admissible de l'élément ( = $(EI)_O/M_O$)

L = la longueur de l'élément

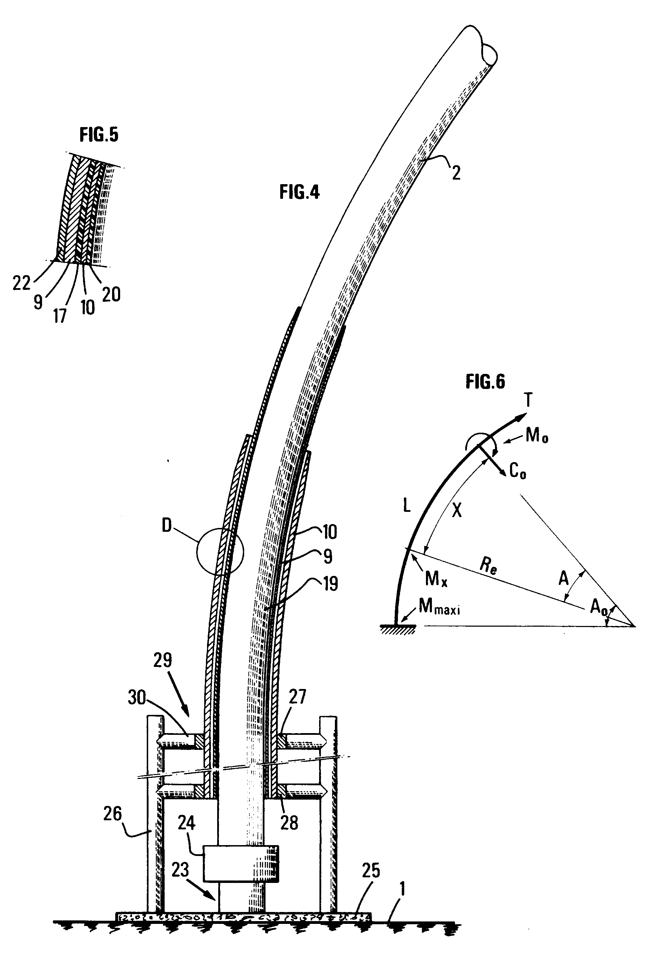

Pour mieux comprendre ces désignations, on peut se reporter à la figure 6 de la présente demande.

Il peut être démontré que les relations suivantes sont approximativement exactes :

$$C_O = K_R.M_O \qquad (1)$$

La longueur (L) nécessaire pour l'élément

$$L = (EI)_O \left[ \frac{A_B}{M_O} - \frac{1}{V_R} \right] \qquad (2)$$

L'angle ($A_e$) dont doit fléchir l'élément est

$$A_e = \left[ \frac{1}{1 + \frac{(EI)_0}{V_R \cdot L}} \right] A_B \qquad (3)$$

L'évolution requise de la raideur en flexion (EI) le long de l'élément

$$(EI)_x = (EI)_0 \left[ 1 + K_R \cdot x \right] + T \frac{x^2}{2} \qquad (4)$$

Le moment maximal à l'extrémité inférieure de l'élément

$$M_{max} = M_0 \left[ 1 + K_R \cdot L \right] + T \cdot R_e \frac{A_e^2}{2} \qquad (5)$$

On déduit de l'équation (2) que plus la raideur minimale en flexion $(EI)_0$ de l'élément est faible, plus l'élément peut être court.

L'équation (5) démontre que le moment maximal transmis à la fondation est en rapport direct avec la longueur (L) de l'élément et du rayon de courbure ($R_e$) admis. Il est donc intéressant de rendre cet élément aussi souple que possible.

Dans le cas où la colonne est fabriqué dans un matériau souple comme, par exemple, un matériau composite (fibres de carbone/fibres de verre/résine) et l'élément est constitué d'un matériau raide comme de l'acier par exemple, il est possible que le moment admissible ($M_0$) à la jonction entre eux soit beaucoup plus faible dans la colonne que dans l'élément.

Il y a deux solutions possibles.

L'élément peut être fait plus long que nécessaire pour lui-même. L'alternative est d'introduire un joint de transition de plusieurs mètres de long et de section constante entre la colonne et l'élément à raideur variable.

La solution optimale, pour éviter d'avoir à introduire un joint de transition entre la colonne et l'élément à raideur variable, est que l'extrémité supérieure de l'élément soit au moins aussi souple en flexion que la colonne elle-même. Dans le cas d'une colonne comportant des matériaux composites (fibres de carbone/fibres de verre/résine), la souplesse requise est difficile à obtenir. L'idéal serait de fabriquer l'élément également en matériau composite.

Actuellement il est difficile de réaliser une telle pièce avec la variation de raideur requise.

Dans le cas d'un élément en acier ou titane, l'épaisseur minimale nécessaire pour sa tenue mécanique conduit à une raideur en flexion bien supérieure à celle d'une colonne en matériau composite. La présente invention résoud ce problème.

La raideur en flexion d'un élément en métal peut être réduite en y introduisant des fentes longitudinales, et l'étanchéité être assurée par une chemise.

Cette chemise peut être conçue pour résister à la traction ainsi qu'à la pression. Aussi, la partie métallique fendue joue un rôle de raidisseur contre la flexion.

On peut aussi entourer un tube en composite de lames ou coquilles en métal ou éventuellement en d'autres matériaux en une ou plusieurs couches.

Les dimensions (largeur et épaisseur) de chaque lame ou coquille peuvent être conçues pour que l'évolution de la raideur de l'ensemble tube plus coquilles le long de l'élément soit celle requise par un pied de riser à raideur variable tout en respectant les contraintes limites des différents composants de l'élément.

Les coquilles peuvent être noyées dans un matériau souple pour protéger le tube en composite. Elles peuvent être maintenues ensemble par un frettage externe.

Le moment de flexion peut être transmis à la fondation à travers le connecteur du tube en composite.

Il peut également y être transmis indépendamment en créant un couple entre deux points d'appui.

Telle qu'elle est revendiquée, la présente invention concerne un élément à raideur variable permettant, plus particulièrement, la connexion entre l'extrémité d'une ligne et une installation fixe comportant plusieurs lames, lesdites lames ayant chacune une forme allongée dont la section droite est plus grande du côté de ladite installation que de l'autre côté, et au moins les parties des deux lames successives d'une même circonférence ne se touchent pas, la partie supérieure d'une lame correspondant à l'extrémité de la lame la plus éloignée de ladite installation, de plus la largeur circonférentielle desdites parties supérieures diminue en s'éloignant de ladite installation.

La partie supérieure d'une lame peut avoir une forme d'ogive.

L'une au moins desdites lames a une épaisseur sensiblement constante.

L'élément peut comporter au moins deux couches de lames sensiblement coaxiales.

Lesdites lames peuvent être métalliques.

L'élément peut être utilisé pour la connexion entre l'extrémité d'une ligne et d'une installation, la ligne pouvant être une ligne tendue.

L'élément peut être utilisé pour la connexion entre l'extrémité d'une ligne et d'une installation, l'installation étant placée au fond de l'eau et la ligne comportant une autre extrémité fixée à une installation flottante de surface, telle une plate-forme marine.

L'élément peut être utilisé pour la connexion entre l'extrémité d'une ligne et d'une installation, la ligne pouvant être une colonne montante.

La présente invention sera mieux comprise et ses avantages apparaîtront plus clairement à la description qui suit d'exemples particuliers illustrés par les figures ci-jointes parmi lesquelles :

- la figure 1 représente un schéma d'ensemble qui comporte une plateforme marine, une colonne et un joint de connexion de celle-ci au fond de l'eau,
- la figure 2 et la figure 2A représentent une coupe schématique d'un joint selon la présente invention,
- la figure 3 est une vue développée du raidisseur selon la figure 2, et
- la figure 4 représente un mode de réalisation de la base d'un joint servant au transfert des efforts au sol,
- la figure 5 montre un détail du raidisseur selon la présente invention, et
- la figure 6 sert à introduire les grandeurs déjà mentionnées précédemment.

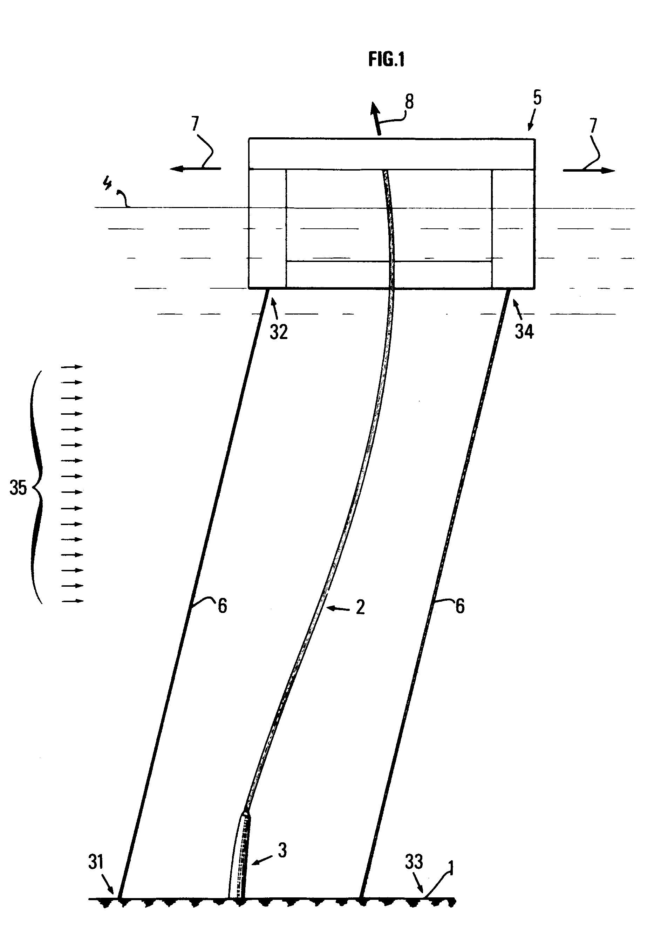

Sur la figure 1, la référence 1 désigne le fond marin auquel doit être fixée la colonne 2 par l'intermédiaire de l'élément de connexion 3 selon la présente invention.

La référence 4 désigne la surface de l'eau sur laquelle flotte une plateforme 5, par exemple à lignes tendues 6. La colonne est soumise à un effort de traction symbolisé par la flèche 8 pouvant être exercée à partir de la plateforme 5.

Cette platefome ainsi que la colonne sont soumises du fait, notamment, du vent et des courants 35 à des déplacements symbolisés par les flèches 7. Ces déplacements imposent une déformation de la colonne 2 du type illustré à la figure 1.

Afin que ces déplacements n'entrainent pas une rupture rapide du pied de la colonne à l'endroit où celle-ci est encastrée au sol, la présente invention propose un connecteur 3 à raideur variable de faible encombrement.

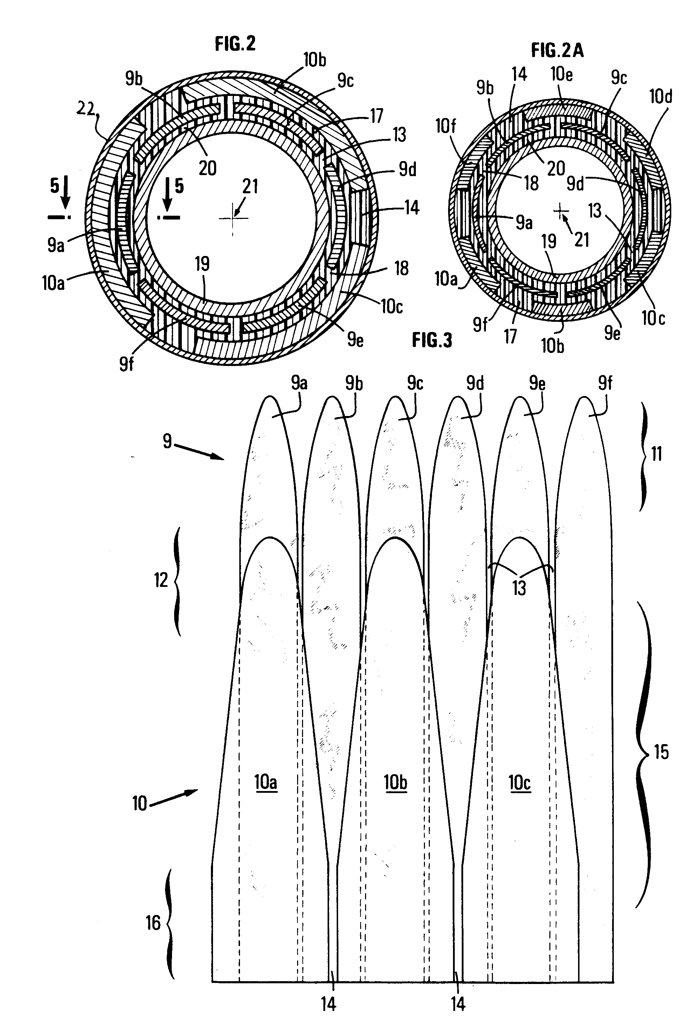

La figure 2 illustre une coupe de l'élément à raideur variable comportant deux couches de lames ou coquilles respectivement désignées 9 et 10.

Sur l'exemple représenté, la première couche 9 ou couche interne comporte 6 lames désignées par les réfrences 9a, 9b...9f et la deuxième couche 10 ou couche externe comporte 3 lames 10a, 10b et 10c.

Avantageusement, la couche externe pourra comporter 6 lames référencées 10a, 10b...10e, 10f, comme cela est représenté à la figure 2A.

Bien entendu, le nombre de couches de lames ainsi que le nombre de lames par couche n'est nullement limitatif et sera fonction des matériaux utilisés, ainsi que des conditions de fonctionnement.

La figure 3 représente les deux couches de lames sous forme développée vues de l'extérieur.

Dans l'exemple représenté à la figure 3, l'extrémité supérieure 11 et 12 des différentes lames des couches 9 et 10 respectivement ont une section droite qui diminue au fur et à mesure que l'on s'éloigne du fond de l'eau qui est sensé être vers le bas de cette figure 3.

Les lames de la couche interne 9 sont plus hautes que celles de la couche externe 10.

Sur la figure 3, on note que les lames ont une forme droite (à section constante) sur leur partie inférieure 15 et 16 et que les espaces inter-lames 13 et 14 ont été aménagés entre les lames d'une même couche de manière à permettre le libre déplacement des unes par rapport aux autres pour réduire les frottements entre lames.

Pour les même raisons, un espace inter-couches 17 pourra être maintenu libre entre la couche interne 9 et externe 10.

Ces espaces inter-lames et inter-couches pourront être avantageusement remplis d'un matériau déformable 14 tel, par exemple, un matériau élastomère.

La référence 19 désigne la chemise d'étanchéité qui assure la continuité avec la colonne.

Cette chemise peut être réalisée dans le même matériau que la colonne notamment lorsque celle-ci comporte des matériaux composites.

Avantageusement, on maintiendra un espace entre la paroi externe de la chemise d'étanchéité 19 et la couche 9 de lames internes et cet espace sera rempli d'un matériau déformable 20 permettant le transfert latéral des efforts. Ce matériau pourra comporter un élastomère.

Par ailleurs, ce matériau pourra être le même que celui qui occupe les espaces inter-lames et/ou inter-couches.

Ce matériau pourra être moulé et/ou vulcanisé autour des lames et des couches 10 et de la chemise d'étanchéité.

Sur l'exemple représenté à la figure 2, chacune des couches internes 9 et externes 10 est inscrite sensiblement sur un cylindre et sont sensiblement coaxiales à l'axe 21.

La référence 22 désigne un organe de frettage circonférentiel autour des lames externes de la deuxième couche 10.

Bien entendu, on pourra introduire un matériau déformable tel de l'elastomère entre l'organe de frettage et la deuxième couche 10 dans la mesure où ces deux derniers ne se touchent pas.

La figure 4 représente une vue partielle en coupe de l'élément à raideur variable selon la présente invention correspondant au détail représenté en D sur la figure 4.

La figure 5 illustre un mode de transfert des efforts exercés sur l'élément à raideur variable au fond de l'eau 1.

Sur cette figure, seuls les lames de l'élément à raideur variable ont été représentées. La chemise d'étanchéité fait partie intégrante de la colonne 2.

La connexion de la colonne à l'installation de fond 23 se fait par un connecteur 24 qui assure la continuité avec l'installation de fond de l'espace étanche défini par l'intérieur de la colonne. Les efforts de traction sont transmis directement par la colonne à l'embase par l'intermédiaire du connecteur 24.

Les efforts de flexion encaissés par les lames des couches 9 et 10 sont transmises à l'embase 25 par des piliers 26 sensiblement verticaux. Ces piliers peuvent être au nombre de quatre placés aux sommets d'un carré. Ces piliers sont connectés à au moins deux pièces de maintien 27 et 28 de l'extrémité inférieure 29 de l'élément à raideur variable.

Ces pièces, qui peuvent être des anneaux, maintiennent l'extrémité inférieure de l'élément à raideur variable à deux niveaux différents suffisamment distants l'un de l'autre pour pouvoir transmettre dans de bonnes conditions le couple exercé sur la base de la colonne vers les piliers 26, via les bras 30 et enfin des piliers vers l'embase 25.

Cette embase peut être fixée au fond de l'eau éventuellement par des pieux non représentés.

On ne sortira pas du cadre de la présente invention en utilisant d'autres organes de transfert du couple entre l'extrémité inférieure de l'élément à raideur variable et le fond de l'eau.

De même, on ne sortira pas du cadre de la présente invention si les lames sont solidaires les unes des autres à leur extrémité inférieure et notamment si elles font partie d'une seule et même pièce.

Les lames pourront être ou non d'épaisseur constante, de même qu'elles pourront être métalliques ou constituées d'un autre matériau ayant une raideur suffisante pour transférer le couple vers l'embase 25.

On ne sortira pas du cadre de la présente invention en utilisant l'élément à raideur variable à au moins l'une des extrémités 31, 32, 33 ou 34 des lignes tendues 6 d'ancrage de la figure 1.

**Revendications**

1. Elément à raideur variable permettant la connexion entre l'extrémité d'une ligne et une installation fixe comportant plusieurs lames, chacune desdites lames ayant une forme allongée dont la section droite est plus grande du côté de ladite installation que de l'autre côté, au moins les parties supérieures des deux lames successives d'une même circonférence ne se touchant pas, par partie supérieure d'une lame étant compris l'extrémité de la lame la plus éloignée de ladite installation, caractérisé en ce que la largeur circonférentielle desdites parties supérieures diminue en s'éloignant de ladite installation.

2. Elément selon la revendication 1, caractérisé en ce que la partie supérieure d'au moins une lame a une forme d'ogive.

3. Elément selon l'une des revendications précédentes, caractérisé en ce que l'une au moins desdites lames a une épaisseur sensiblement constante.

4. Elément selon l'une des revendications précédentes, caractérisé en ce qu'il comporte au moins deux couches de lames sensiblement coaxiales.

5. Elément selon l'une des revendications 1 à 4, caractérisé en ce que lesdites lames sont métalliques.

6. Utilisation de l'élément selon l'une des revendications précédentes pour la connexion entre l'extrémité d'une ligne et d'une installation, ladite ligne étant une ligne tendue.

7. Utilisation de l'élément selon l'une des revendications 1 à 5 pour la connexion entre l'extrémité d'une ligne et d'une installation, ladite installation étant placée au fond de l'eau, et ladite ligne comportant une autre extrémité fixée à une installation flottante de surface, telle une plate-forme marine.

8. Utilisation de l'élément selon l'une des revendications 1 à 5 pour la connexion entre l'extrémité d'une ligne et d'une installation, ladite ligne étant une colonne montante.

## Claims

1. A variable stiffness element allowing to connect the end of a line to a stationary installation, comprising several strips, each of said strips having an elongate shape whose cross-section is larger on said installation side than on the other side, and at least the upper parts of the two successive strips of a single circumference do not touch, what is called upper part of a strip being the end of the strip which is the furthest from said installation, wherein the circumferential width of said upper parts decreases as they are further from said installation.

2. An element as claimed in claim 1, wherein the upper part of at least one strip has the shape of an ogive.

3. An element as claimed in any one of the previous claims, wherein at least one of said strips has a substantially constant thickness.

4. An element as claimed in any one of the previous claims, comprising at least two substantially coaxial strip layers.

5. An element as claimed in any one of claims 1 to 4, wherein said strips are metallic.

6. Use of the element as claimed in any one of the previous claims for connecting the end of a line and an installation, said line being a taut line.

7. Use of the element as claimed in any one of claims 1 to 5 for connecting the end of a line and an installation, said installation being located at the water bottom, and said line comprising another end fixed to a floating surface installation such as an offshore platform.

8. Use of the element as claimed in any one of claims 1 to 5 for connecting the end of a line and an installation, said line being a riser.

## Patentansprüche

1. Element mit variabler Steifigkeit, das die Verbindung zwischen dem Ende einer Leitung und einer festen Installation ermöglicht, mit mehreren Lamellen bzw. Blattfedern, wobei jede dieser Lamellen eine längliche Form hat, deren gerader Querschnitt installationsseitig größer als auf der anderen Seite ist, wobei wenigstens die oberen Teile der zwei aufeinanderfolgenden Lamellen eines gleichen Umfangs sich nicht berühren, und unter dem oberen Teil einer Lamelle das Ende der Lamelle zu verstehen ist, das von dieser Installation am weitesten entfernt ist, dadurch gekennzeichnet, daß die Umfangsbreite

6

dieser oberen Teile mit der Entfernung von dieser Installation abnimmt.

2.  Element nach Anspruch 1, dadurch gekennzeichnet, daß der obere Teil wenigstens einer Lamelle die Form eines Spitzbogens hat.

3.  Element nach einem der vorhergehenden Ansprüche, dadurch gekennzeichnet, daß wenigstens eine dieser Lamellen eine im wesentlichen konstante Dicke hat.

4.  Element nach einem der vorhergehenden Ansprüche, dadurch gekennzeichnet, daß es wenigstens zwei im wesentlichen koaxiale Schichten von Lamellen umfaßt.

5.  Element nach einem der Ansprüche 1 bis 4, dadurch gekennzeichnet, daß diese Lamellen metallisch sind.

6.  Verwendung des Elements nach einem der vorhergehenden Ansprüche zur Verbindung zwischen dem Ende einer Leitung und einer Installation, wobei die Leitung eine gespannte Leitung ist.

7.  Anwendung des Elements nach einem der Ansprüche 1 bis 5 zur Verbindung zwischen dem Ende einer Leitung und einer Installation, wobei diese Installation am Boden des Wassers angeordnet ist und diese Leitung ein anderes Ende umfaßt, das an eine Oberflächenschwimminstallation, beispielsweise eine Marineplattform, befestigt ist.

8.  Verwendung des Elements nach einem der Ansprüche 1 bis 5 zur Verbindung zwischen dem Ende einer Leitung und einer Installation, wobei diese Leitung eine Steigkolonne ist.

**FIG.1**

**FIG.2**

**FIG.2A**

**FIG.3**

EP 0 296 056 B1

FIG.5

FIG.4

FIG.6

10